# FASCICULE DE BREVET EUROPEEN

(11) **EP 1 487 076 B1**
(45) Date de publication et mention de la délivrance du brevet: **03.09.2014**
(21) Numéro de dépôt: 04012661.7
(22) Date de dépôt: 28.05.2004
(51) Int. Cl.: H02H 3/04

(54) **Procédé et dispositif de commande d'un volet motorisé**
Verfahren sowie Vorrichtung zur Steuerung eines motorisierten Rolladen
Method and device for controlling a motorised roller shutter

(30) Priorité: 10.06.2003 FR 0306934
(43) Date de publication de la demande: 15.12.2004
(73) Titulaire: Somfy SAS, 74300 Cluses (FR)
(72) Inventeur: Grehant, Bernard, 74300 Nancy-Sur-Cluses (FR)
(74) Mandataire: Bugnion Genève

(56) Documents cités:
- EP-A- 0 672 912
- DE-A1- 4 440 449

## Description

L'invention concerne un procédé de détermination de l'état probable d'un disjoncteur thermique d'un dispositif de fermeture, d'occultation ou de protection solaire comprenant un moteur d'entraînement, de type à induction, asynchrone monophasé et à condensateur permanent, alimenté à travers un disjoncteur thermique et un moyen de mesure, utilisé pour assurer la détection de butées ou d'obstacles pour la charge mobile entraînée par le moteur. Elle concerne de plus un dispositif permettant de mettre en oeuvre un tel procédé.

Ces dispositifs, notamment les volets roulants, les stores, les écrans et les rideaux sont entraînés par des moteurs par exemple de type tubulaire à usage intermittent. Ces moteurs sont munis d'un disjoncteur thermique également appelé « capsule thermique ». Il s'agit généralement d'un simple dispositif à bilame, de petites dimensions, qui est inséré dans le bobinage du moteur ou à proximité immédiate de celui-ci. La présence d'un tel composant est imposée par des normes et règlements. Cette présence se justifie par les conditions quasi-adiabatiques de fonctionnement du moteur dans son environnement.

En effet, si on prend l'exemple d'un actionneur tubulaire de volet roulant comprenant un moteur, on trouve autour de celui-ci les enveloppes suivantes :
- le tube de l'actionneur réalisé par exemple en matière plastique,
- le tube d'enroulement du volet, entraîné en rotation par l'actionneur,
- une ou plusieurs couches d'enroulement du volet roulant, selon l'état d'enroulement,
l'ensemble étant enfermé dans un caisson.

Les échanges thermiques entre le moteur et l'extérieur sont très limités, par rapport à un moteur prévu pour un fonctionnement permanent et comprenant une roue de ventilation forcée.

Compte tenu de ces conditions de fonctionnement, l'échauffement des bobinages du moteur par effet Joule conduirait à des températures dangereuses, susceptibles de provoquer un incendie si la réglementation ne prévoyait pas la présence de disjoncteurs thermiques.

Grâce à la présence de ce disjoncteur, l'alimentation du moteur est coupée automatiquement et de manière simple dès que la température dépasse une température fixée très en deçà de la température critique risquant de provoquer un incendie.

De la demande de brevet EP 0 672 912, on connaît un dispositif permettant d'indiquer l'état de disponibilité d'un moteur à induction, de type asynchrone monophasé et à condensateur permanent. Ce dispositif permet d'afficher en permanence, pourvu que la tension du secteur soit présente, l'état de 5 variables logiques, dont une représenté l'état d'un interrupteur thermique. Ce dispositif nécessite des capteurs de courant et des capteurs de tension associés à une logique de détection et d'affichage de l'état de disponibilité du moteur. Un tel dispositif est compliqué et son coût est par conséquent trop important pour qu'il soit implanté dans des dispositifs courant de fermeture, d'occultation ou de protection solaire.

Il est clair qu'un capteur de courant permet d'identifier facilement une ouverture dans le circuit d'alimentation du moteur. Cependant, pour le type de moteurs auquel s'applique l'invention, moteur à induction de type asynchrone monophasé et à condensateur permanent, la valeur mesurée du courant ne peut pas être facilement corrélée à une grandeur intéressant le contrôle et/ou le pilotage du moteur, par exemple son couple. Contrairement à ce qui se passe pour un moteur à courant continu, on a par exemple ici un courant à vide supérieur au courant en charge. Ainsi donc, un capteur de courant n'aurait pour seul but que de permettre l'identification de l'ouverture du circuit, ce qui rend cette fonction coûteuse.

Le but de l'invention est de fournir un procédé palliant à l'inconvénient cité et améliorant les procédés connus de l'art antérieur. En particulier, l'invention se propose de fournir un procédé simple permettant de détecter l'état du disjoncteur thermique. L'invention concerne également un dispositif permettant de mettre en oeuvre un tel procédé.

Le procédé de commande selon l'invention est caractérisé en ce qu'au moins une information délivrée par le moyen de mesure, combinée avec une information d'alimentation du moteur, permet de déterminer l'état probable du disjoncteur thermique. Dans la mesure où l'état du disjoncteur thermique est déduit de manière indirecte d'informations, cet état n'est réellement connu que lorsque le dispositif fonctionne de manière normale. En effet, des dysfonctionnements du dispositif peuvent entraîner une indication erronée de l'état du disjoncteur thermique, par exemple suite à la rupture accidentelle d'une connexion électrique.

Différents modes d'exécution du procédé sont définis par les revendications dépendantes 2 à 7.

Le dispositif de fermeture, d'occultation ou de protection solaire pour la mise en oeuvre d'un tel procédé comprend un émetteur d'ordres et un récepteur d'ordres pilotant un moteur de type à induction, asynchrone monophasé et à condensateur permanent. Il est caractérisé, dans un premier mode de réalisation, en ce que le récepteur d'ordres comprend un programme d'élaboration de l'état probable du disjoncteur thermique et en ce que l'émetteur d'ordres comprend un moyen d'affichage de cet état transmis par le récepteur d'ordres.

Le dispositif peut, dans un deuxième mode de réalisation, être caractérisé en ce que l'émetteur d'ordres comprend un programme d'élaboration de l'état probable du disjoncteur thermique à partir de l'information transmise par le récepteur d'ordres et en ce que l'émetteur d'ordres comprend un moyen d'affichage de cet état.

Le dessin annexé représente, à titre d'exemple, plusieurs modes d'exécution du procédé et un mode de réalisation d'un dispositif selon l'invention.

La figure 1 est un schéma d'un mode de réalisation d'un dispositif selon l'invention.

Les figures 2 à 4 sont des ordinogrammes de modes de réalisation de procédés de commande selon l'invention.

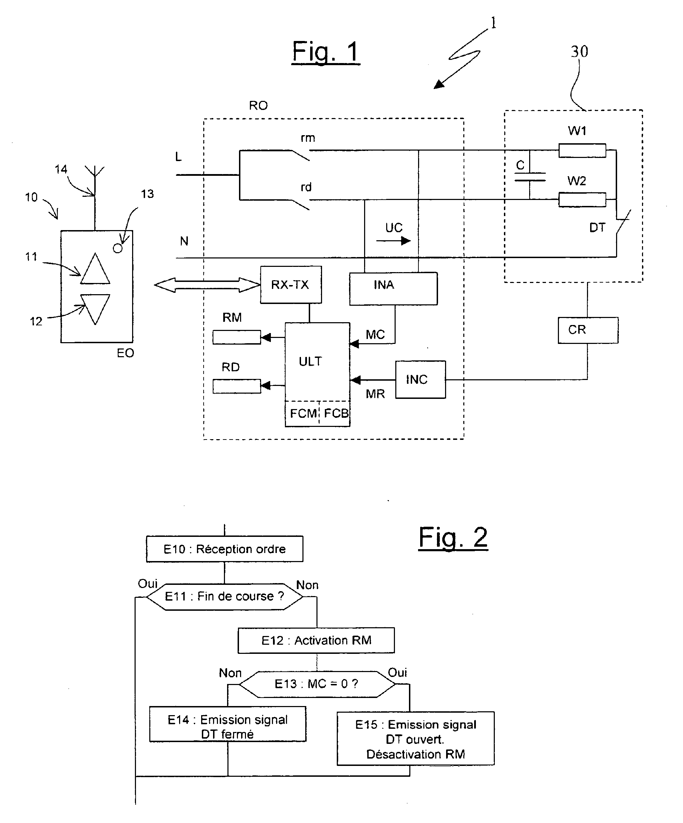

Le dispositif de commande 1 représenté à la figure 1 comprend un émetteur d'ordres EO susceptible de communiquer avec un récepteur d'ordres RO pilotant un moteur 30 d'entraînement d'un écran mobile tel que, par exemple, un équipement de protection solaire ou de fermeture d'un bâtiment.

L'émetteur d'ordres comprend un clavier représenté symboliquement par deux touches 11 et 12, des moyens 14 de communication avec le récepteur d'ordres, ainsi qu'un moyen d'affichage 13 de l'état de disponibilité du moteur. Ce moyen est par exemple constitué d'une ou deux diodes électroluminescentes ou encore d'une diode électroluminescente bicolore. Ce moyen peut encore consister en un écran ou un dispositif d'émission d'ondes sonores. Il peut être affecté, pendant certaines phases de fonctionnement de l'émetteur d'ordres EO, à d'autres fonctions que celle d'affichage de l'état de disponibilité du moteur. L'émetteur d'ordres EO est susceptible de communiquer par exemple à distance, de manière bidirectionnelle, avec un ou plusieurs récepteurs d'ordres. Les moyens d'émission et de réception sont connus de l'homme du métier.

Le récepteur d'ordres RO comprend une unité logique de traitement ULT, des moyens RX-TX de communication avec l'émetteur d'ordres, des relais dont les organes RM et RD commandent les organes rm et rd permettant de fermer des circuits électriques d'alimentation du moteur 30 à partir du secteur pour le faire tourner dans un sens ou dans l'autre. L'unité logique de traitement ULT élabore des ordres en direction des organes de commandé RM et RD en fonction des ordres de commande reçus par les moyens de communication RX-TX depuis l'émetteur d'ordres EO. L'unité logique de traitement ULT comprend deux zones de mémoire référencées FCM et FCB permettant d'enregistrer les positions de fin de course de l'écran mobile.

Le moteur 30 comprend, entre ses deux enroulements W1 et W2, un condensateur de déphasage C et, sur le conducteur les raccordant au conducteur neutre du secteur, un disjoncteur thermique DT permettant de couper l'alimentation du moteur lorsque la température dépasse une certaine valeur critique. Pour plus de simplicité, la charge entraînée par le moteur n'est pas représentée. Il s'agit d'un écran mobile et/ou enroulable de type store, volet roulant ou porte coulissante. Du fait de son mode de branchement, le condensateur de déphasage C est aussi appelé « condensateur permanent ».

Entre les bornes du condensateur de déphasage C, un module électronique INA mesure la tension UC du condensateur. Ce module transmet à l'unité logique de traitement ULT un signal MC image de la tension mesurée. Comme décrit plus bas, ce signal est normalement utilisé pour fournir une image du couple moteur.

Un capteur de rotation CR est relié à une interface de comptage INC dans le récepteur d'ordres. Cette interface de comptage est reliée à l'unité logique de traitement ULT. Un signal MR est issu de l'interface de comptage INC dont l'entrée est raccordée au capteur de rotation CR. Ce capteur est, par exemple constitué de deux sondes à effet Hall décalées et d'un aimant multipolaire entraîné par le rotor. Le capteur CR peut aussi être disposé sur le tube d'enroulement entraîné par le rotor ou entraîné par un réducteur lui-même entraîné par le rotor. Une mesure de rotation nulle, constatée après la mise sous tension du moteur, ou constatée au moins quelques dixièmes de seconde après cette mise sous tension si le capteur CR n'est pas directement relié au rotor est le signe d'une ouverture du disjoncteur thermique DT pour autant que le moteur n'ait pas été antérieurement arrêté du fait d'une détection d'obstacle. Ainsi, on constate donc que l'interface de comptage INC peut être conçu pour délivrer une information qui, combinée, avec une autre information, telle qu'une information d'alimentation du moteur dans un sens où la rotation est normalement possible, permet de déduire l'état (ouvert/fermé) du disjoncteur thermique DT. Aucun autre capteur, n'est alors nécessaire pour détecter l'état du disjoncteur DT.

L'unité logique de traitement ULT reçoit un signal MC du module électronique de mesure de tension et/ou un signal MR de l'interface de comptage qui sont utilisés, lorsque le moteur est activé, pour le contrôler et/ou le piloter. En particulier, ces signaux permettent de déterminer les positions des butées ou fins de course haute et basse, d'arrêter le moteur à l'approche de ces fins de course ou de détecter la présence de points durs dans la chaîne cinématique ou d'obstacles en cours de mouvement.

Le signal MC donnant la valeur de la tension aux bornes du condensateur C de déphasage est une image du couple moteur. Il est en effet connu de l'art antérieur d'utiliser cette tension pour déterminer indirectement le couple du moteur et/ou ses variations. Par exemple, pour un moteur fonctionnant en 230 V, UC sera comprise entre 350 et 250 V selon que le moteur est utilisé à vide ou à pleine charge.

En cas d'ouverture du disjoncteur thermique DT, alors que l'organe commandé rm ou rd du relais RM ou RD est fermé pour alimenter le moteur, la tension UC est nulle aux bornes du condensateur C. En effet, même l'ouverture du disjoncteur thermique DT se produit alors que le condensateur C est chargé, celui-ci se décharge en quelques millisecondes seulement à travers les bobinages W1 et W2.

On constate que le module électronique INA de mesure de la tension UC peut être conçu pour délivrer une information qui, combinée, avec une information d'alimentation du moteur, permet de déduire l'état (ouvert/fermé) du disjoncteur thermique DT. Aucun autre capteur, n'est alors nécessaire pour détecter l'état du disjoncteur DT.

L'état du disjoncteur thermique est transmis au moyen d'affichage du disjoncteur thermique qui permet d'informer l'utilisateur.

L'ordinogramme de la figure 2 représente un procédé de commande du moteur mis en oeuvre par le dispositif.

L'émetteur d'ordres EO envoie un ordre de commande de montée de l'écran mobile. Cet ordre est reçu par le récepteur d'ordres RO à l'étape E10. A l'étape E11, le récepteur teste si l'écran mobile se trouve dans sa position de fin de course haute. Si tel est le cas, l'ordre de commande de montée de l'écran est sans effet sur le moteur. Si tel n'est pas le cas, à l'étape E12, l'unité logique de commande alimente l'organe RM commandant le contact rm permettant d'alimenter le moteur dans le sens de la montée de l'écran. Une temporisation de quelques millisecondes, non représentée, est enclenchée avant le passage à l'étape suivante E13 où la tension UC entre les bornes du condensateur C est alors mesurée. Si cette tension est nulle, le disjoncteur thermique est déclaré dans son état ouvert. Un message d'information de l'état du disjoncteur thermique est alors envoyé en direction des moyens d'affichage à l'étape E15 et l'unité logique de traitement cesse d'alimenter l'organe RM. Si la tension UC n'est pas nulle, le disjoncteur thermique est dans son état fermé. Un message d'information de l'état du disjoncteur thermique est alors envoyé en direction des moyens d'affichage à l'étape E14 et l'unité logique de traitement continue d'alimenter l'organe RM qui maintient fermé le contact rm et permet la rotation du moteur dans le sens de la montée de l'écran.

Le même type de séquence de commande est appliqué lorsque le récepteur d'ordres reçoit un ordre de descente de l'écran mobile.

De plus, une fois le signal d'information de l'état de disponibilité du moteur activé, il est possible que le récepteur d'ordres RO active un programme de test automatique du signal MC issu du module électronique INA même en l'absence d'émission de nouveaux ordres de commande. Ce programme consiste par exemple à activer périodiquement les organes RM ou RD de commande des contacts rm ou rd pendant un temps très court, par exemple inférieur à 100 millisecondes, et à observer l'évolution du signal MC au cours de cette activation. La période de scrutation TS peut être de 30 secondes, sachant qu'une durée de refroidissement s'exprime en minutes.

Il est clair que si le signal d'information d'indisponibilité du moteur reste actif au-delà d'une durée à définir selon les applications, par exemple 15 minutes, alors le défaut n'est plus d'ordre thermique (collage du disjoncteur, coupure d'un circuit...) et un autre indicateur de défaut peut être activé.

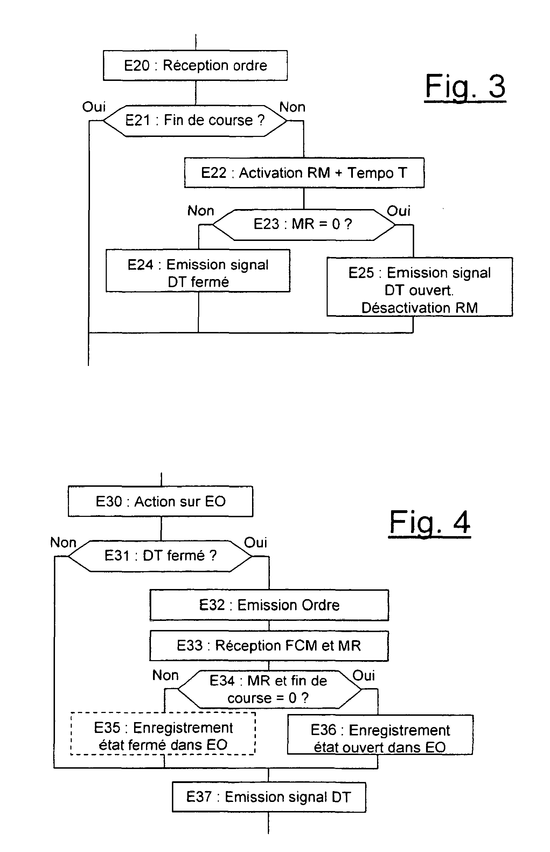

L'ordinogramme de la figure 3 représente un procédé de commande du moteur mis en oeuvre par le dispositif. Ce procédé utilise le signal MR pour déterminer l'état du disjoncteur thermique DT.

L'émetteur d'ordres EO envoie un ordre de commande de montée de l'écran mobile. Cet ordre est reçu par le récepteur d'ordres RO à l'étape E20. A l'étape E21, le récepteur RO teste si l'écran mobile se trouve dans sa position de fin de course haute. Si tel est le cas, l'ordre de commande de montée de l'écran est sans effet sur le moteur. Si tel n'est pas le cas, à l'étape E22, l'unité logique de commande alimente l'organe RM commandant le contact rm permettant d'alimenter le moteur dans le sens de la montée de l'écran. Une temporisation T de quelques millisecondes est enclenchée avant le passage à l'étape suivante E23 où le mouvement de la chaîne cinématique est testé. Si aucun mouvement n'est détecté, le disjoncteur thermique DT est déclaré dans son état ouvert. Un message d'information de l'état du disjoncteur thermique est alors envoyé en direction des moyens d'affichage à l'étape E25 et l'unité logique de traitement cesse d'alimenter l'organe RM. Si un mouvement est détecté, le disjoncteur thermique DT est dans son état fermé. Un message d'information de l'état du disjoncteur thermique DT est alors envoyé en direction des moyens d'affichage à l'étape E24 et l'unité logique de traitement continue d'alimenter l'organe RM qui maintient fermé le contact rm et permet la rotation du moteur dans le sens de la montée de l'écran.

Comme précédemment, le même type de séquence de commande peut être appliqué lorsque le récepteur d'ordres reçoit un ordre de descente de l'écran mobile. De plus, une fois le signal d'information de l'état du disjoncteur activé, il est à nouveau possible que le récepteur d'ordres active un programme de test automatique du signal MR, même en absence d'émission de nouveaux ordres de commande.

L'ordinogramme de la figure 4 représente un procédé de commande du moteur mis en oeuvre par le dispositif et permettant l'élaboration de l'information d'état du disjoncteur DT au niveau de l'émetteur d'ordres.

A l'étape E30, l'utilisateur effectue une action sur l'émetteur d'ordres EO. L'état du disjoncteur thermique DT, connu de l'émetteur d'ordres EO, est aussitôt testé par ce dernier à l'étape E31.

Si l'émetteur d'ordres EO sait que le disjoncteur DT est ouvert alors l'émetteur d'ordres émet, à l'étape E37, le signal d'état du disjoncteur thermique.

Dans le cas contraire, à l'étape E32, l'émetteur d'ordres émet un ordre de commande en direction du récepteur d'ordres RO et attend de ce dernier un retour d'information. Ce retour d'information, effectué à l'étape E33, peut prendre de multiples formes. Il est supposé contenir ici au moins l'indication de mouvement de la chaîne cinématique et l'indication de fin de course.

Il faut noter que l'indication de fin de course FCM pourrait tout aussi bien avoir été transmise (ou diffusée) préalablement à l'émetteur d'ordres par le récepteur d'ordres lors de leur dernière communication. Dans ce cas, l'étape E31 de test pourrait être accompagnée d'un deuxième test préalable portant sur l'état des positions de fin de course, de manière à ne pas émettre d'ordre de commande de montée quand l'émetteur d'ordres sait déjà le moteur en position de fin de course haute.

Si, à l'étape E34, l'émetteur d'ordres constate que le mouvement de la chaîne cinématique est nul et que le moteur n'est pas en position de fin de course, alors il passe à l'étape E36 dans laquelle il enregistre l'état ouvert du disjoncteur thermique DT. Dans le cas contraire, à l'étape E35, l'émetteur d'ordres enregistre l'état fermé du disjoncteur thermique DT. L'émetteur d'ordres émet ensuite à l'étape E37, l'état du disjoncteur thermique DT.

Par mesure de sécurité, il est aussi possible à ce stade de prévoir un test systématique et automatique du mouvement limité dans l'autre sens de rotation, par émission de la commande appropriée et attente d'information de retour, avant de conclure à l'ouverture du disjoncteur thermique.

De préférence, l'émetteur d'ordres envoie, suite à l'ouverture du disjoncteur thermique, spontanément des ordres de mouvement limité dans l'un ou l'autre sens, avec par exemple une périodicité de 30 secondes, pour tester le retour fonctionnel du moteur. Au-delà d'une durée déterminée, la persistance de non-rotation sera interprétée comme un défaut d'une autre nature qu'une simple ouverture du disjoncteur thermique.

Bien évidemment, pour ces derniers modes d'exécution mettant en jeu l'élaboration de l'information au sein même de l'émetteur d'ordres, on suppose que le réseau de communication bidirectionnel prévoit un accusé de réception des messages radioélectriques, s'il s'agit du médium utilisé, de manière à ne pas interpréter comme ouverture du disjoncteur thermique ce qui résulterait simplement d'une mauvaise réception d'un ordre de commande transmis du fait d'une portée insuffisante ou de perturbations diverses lors de l'émission.

## Revendications

1. Procédé de détermination de l'état probable d'un disjoncteur thermique (DT) d'un dispositif (1) de fermeture, d'occultation ou de protection solaire comprenant un moteur d'entraînement (30), de type à induction, asynchrone monophasé et à condensateur permanent (C), alimenté à travers le disjoncteur thermique (DT) et un moyen de mesure (CR, INC ; INA), utilisé pour assurer la détection de butées ou d'obstacles pour la charge mobile entraînée par le moteur, **caractérisé en ce qu'**au moins une information délivrée par le moyen de mesure, combinée avec une information d'alimentation du moteur, permet de déterminer l'état probable du disjoncteur thermique (DT).

2. Précédé selon la revendication 1, **caractérisé en ce qu'**au moins une information est une information de mouvement du moteur ou de la charge entraînée par le moteur.

3. Procédé selon la revendication 1 ou 2 **caractérisé en ce que** le moyen de mesure (INC) est conçu pour délivrer une information qui, combinée, avec une information d'alimentation du moteur dans un sens où la rotation est normalement possible, permet de déduire l'état (ouvert/fermé) du disjoncteur thermique (DT).

4. Procédé selon l'une des revendications précédentes, **caractérisé en ce qu'**on teste si la charge mobile se trouve dans une position de fin de course.

5. Procédé selon l'une des revendications précédentes, **caractérisé en ce qu'**au moins une information est une information de tension mesurée aux bornes du condensateur de déphasage (C).

6. Procédé selon l'une des revendications précédentes, **caractérisé en ce que** le moteur est alimenté automatiquement, à intervalles de temps prédéterminés (TS), dès que l'état probable du disjoncteur thermique est l'état ouvert.

7. Procédé selon l'une des revendications précédentes, **caractérisé en ce que** le moteur est alimenté automatiquement dès qu'est émise une commande de mouvement du moteur.

8. Dispositif (1) de fermeture, d'occultation ou de protection solaire mettant en oeuvre le procédé selon l'une des revendications 1 à 7, comprenant un moyen de mesure (CR, INC ; INA), un émetteur d'ordres (EO) et un récepteur d'ordres (RO) pilotant un moteur (30), de type à induction, asynchrone monophasé et à condensateur permanent (C), alimenté à travers un disjoncteur thermique (DT), **caractérisé en ce que** le récepteur d'ordres comprend un programme (E10-E15, E20-E25) mettant en oeuvre le procédé selon l'une des revendications 1 à 7 et **en ce que** l'émetteur d'ordres comprend un moyen d'affichage (13) de cet état transmis par le récepteur d'ordres.

9. Dispositif (1) de fermeture, d'occultation ou de protection solaire selon la revendication 8, **caractérisé en ce qu'**il comprend en outre un moyen de mesure (CR, INC, INA) utilisé pour assurer la détection de butées ou d'obstacles pour la charge mobile entraînée par le moteur, **en ce que** l'émetteur d'ordres (EO) comprend des moyens de communication (14) avec le récepteur d'ordres (RO) et **en ce que** le récepteur d'ordres (RO) comprend des moyens (Rx-Tx) de communication avec l'émetteur d'ordres (EO),

10. Dispositif (1) de fermeture, d'occultation ou de protection solaire mettant en oeuvre le procédé selon l'une des revendications 1 à 7, comprenant un moyen de mesure (CR, INC ; INA), un émetteur d'ordres (EO) et un récepteur d'ordres (RO) pilotant un moteur (30), de type à induction, asynchrone monophasé et à condensateur permanent (C), alimenté à travers un disjoncteur thermique (DT), **caractérisé en ce que** l'émetteur d'ordres comprend un programme (E30-E37) mettant en oeuvre le procédé selon l'une des revendications 1 à 7 et **en ce que** l'émetteur d'ordres comprend un moyen d'affichage (13) de cet état probable du disjoncteur thermique (DT).

## Patentansprüche

1. Verfahren zur Bestimmung des wahrscheinlichen Zustands eines thermischen Schutzschalters (DT) einer Verschluss-, Verdunkelungs- oder Sonnenschutzvorrichtung (1), die einen Antriebsmotor (30) vom Typ einphasiger asynchroner Induktionsmotor und mit Permanentkondensator (C), der über den thermischen Schutzschalter (DT) versorgt wird, und ein Messmittel (CR, INC; INA), das verwendet wird, um die Detektion von Anschlägen oder Hindernissen für die von dem Motor angetriebene mobile Last sicherzustellen, umfasst, **dadurch gekennzeichnet, dass** mindestens eine von dem Messmittel gelieferte Information, kombiniert mit einer Versorgungsinformation des Motors, erlaubt, den wahrscheinlichen Zustand des thermischen Schutzschalters (DT) zu bestimmen.

2. Verfahren nach Anspruch 1, **dadurch gekennzeichnet, dass** mindestens eine Information eine Bewegungsinformation des Motors oder der von dem Motor angetriebenen Last ist.

3. Verfahren nach Anspruch 1 oder 2, **dadurch gekennzeichnet, dass** das Messmittel (INC) ausgebildet ist, um eine Information bereitzustellen, die, in Kombination mit einer Versorgungsinformation des Motors in eine Richtung, wo die Rotation normalerweise möglich ist, erlaubt, den Zustand (offen/geschlossen) des thermischen Schutzschalters (DT) abzuleiten.

4. Verfahren nach einem der vorangehenden Ansprüche, **dadurch gekennzeichnet, dass** man testet, ob sich die mobile Last in einer Endlagenposition befindet.

5. Verfahren nach einem der vorangehenden Ansprüche, **dadurch gekennzeichnet, dass** mindestens eine Information eine Information der an den Klemmen des Phasenverschieber-Kondensators (C) gemessenen Spannung ist.

6. Verfahren nach einem der vorangehenden Ansprüche, **dadurch gekennzeichnet, dass** der Motor automatisch in vorbestimmten Zeitintervallen (TS) versorgt wird, sobald der wahrscheinliche Zustand des thermischen Schutzschalters der geöffnete Zustand ist.

7. Verfahren nach einem der vorangehenden Ansprüche, **dadurch gekennzeichnet, dass** der Motor automatisch versorgt wird, sobald ein Motorbewegungsbefehl gesendet wird.

8. Verschluss-, Verdunkelungs- oder Sonnenschutzvorrichtung (1), die das Verfahren nach einem der Ansprüche 1 bis 7 umsetzt, die ein Messmittel (CR, INC; INA), einen Befehlssender (EO) und einen Befehlsempfänger (RO) zur Steuerung eines Motors (30) vom Typ einphasiger asynchroner Induktionsmotor und mit Permanentkondensator (C), der über einen thermischen Schutzschalter (DT) versorgt wird, umfasst, **dadurch gekennzeichnet, dass** der Befehlsempfänger ein Programm (E10-E15, E20-E25) umfasst, das das Verfahren nach einem der Ansprüche 1 bis 7 umsetzt, und dass der Befehlssender ein Anzeigemittel (13) dieses von dem Befehlsempfänger übertragenen Zustands umfasst.

9. Verschluss-, Verdunkelungs- oder Sonnenschutzvorrichtung (1) nach Anspruch 8, **dadurch gekennzeichnet, dass** sie ferner ein Messmittel (CR, INC, INA) umfasst, das verwendet wird, um die Detektion von Anschlägen oder von Hindernissen für die von dem Motor angetriebene mobile Last sicherzustellen, dass der Befehlssender (EO) Kommunikationsmittel (14) mit dem Befehlsempfänger (RO) umfasst und dass der Befehlsempfänger (RO) Kommunikationsmittel (Rx-Tx) mit dem Befehlssender (EO) umfasst.

10. Verschluss-, Verdunkelungs- oder Sonnenschutzvorrichtung (1), die das Verfahren nach einem der Ansprüche 1 bis 7 umsetzt, die ein Messmittel (CR, INC; INA), einen Befehlssender (EO) und einen Befehlsempfänger (RO) zur Steuerung eines Motors (30) vom Typ einphasiger asynchroner Induktionsmotor und mit Permanentkondensator (C), der über einen thermischen Schutzschalter (DT) versorgt wird, umfasst, **dadurch gekennzeichnet, dass** der Befehlssender ein Programm (E30-E37) umfasst, das das Verfahren nach einem der Ansprüche 1 bis 7 umsetzt, und dass der Befehlssender ein Anzeigemittel (13) dieses wahrscheinlichen Zustands des thermischen Schutzschalters (DT) umfasst.

## Claims

1. A method for determining the likely state of a thermal circuit breaker (DT) of a closing, privacy or sun protection device (1) comprising a drive motor (30), of the induction, mono-phase asynchronous and running capacitor (C) type, powered through the thermal circuit breaker (DT) and a measuring means (CR, INC; INA), used to detect stops or obstacles for the moving load driven by the motor, **characterized in that** at least one piece of information delivered by the measuring means, combined with power information of the motor, makes it possible to determine the likely state of the thermal circuit breaker (DT).

2. The method according to claim 1, **characterized in that** at least one piece of information is movement information of the motor or the load driven by the motor.

3. The method according to claim 1 or 2, **characterized in that** the measuring means (INC) is designed to deliver information which, combined with power information of the motor in a direction where rotation is normally possible, makes it possible to deduce the state (open/closed) of the thermal circuit breaker (DT).

4. The method according to one of the preceding claims, **characterized in that** it is tested whether the moving load is in an end-of-travel position.

5. The method according to one of the preceding claims, **characterized in that** at least one piece of information is voltage information measured across the terminals of the phase shift capacitor (C).

6. The method according to one of the preceding claims, **characterized in that** the motor is powered automatically, at predetermined time slots (TS), once the likely state of the thermal circuit breaker is the open state.

7. The method according to one of the preceding claims, **characterized in that** the motor is powered automatically once a control to move the motor is emitted.

8. A closing, privacy or sun protection device (1) implementing the method according to one of claims 1 to 7, comprising a measuring means (CR, INC; INA), an command transmitter (EO) and an command receiver (RO) controlling a motor (30), of the induction, mono-phase asynchronous and running capacitor (C) type, powered through a thermal circuit breaker (DT), **characterized in that** the command receiver comprises a program (E10-E15, E20-E25) implementing the method according to one of claims 1 to 7 and **in that** the command transmitter comprises a means (13) for displaying that state transmitted by the command receiver.

9. The closing, privacy or sun protection device (1) according to claim 8, **characterized in that** it further comprises a measuring means (CR, INC, INA) used to detect stops or obstacles for the moving load driven by the motor, **in that** the command transmitter (EO) comprises means (14) for communicating with the command receiver (RO) and **in that** the command receiver (RO) comprises means (Rx-Tx) for communicating with the command transmitter (EO).

10. The closing, privacy or sun protection device (1) according to one of claims 1 to 7, comprising a measuring means (CR, INC; INA), an command transmitter (EO) and an command receiver (RO) controlling a motor (30), of the induction, mono-phase asynchronous and running capacitor (C) type, powered through a thermal circuit breaker (DT), **characterized in that** the command transmitter comprises a program (E30-E37) implementing the method according to one of claims 1 to 7 and **in that** the command transmitter comprises a means (13) for displaying that likely state of the thermal circuit breaker (DT).
